## Europäisches Patentamt
## European Patent Office
## Office européen des brevets

(11) Publication number: **0 168 084**
**A1**

(12) # EUROPEAN PATENT APPLICATION

(21) Application number: 85200928.1

(51) Int. Cl.⁴: **F 24 D 11/00**

(22) Date of filing: 11.06.85

(30) Priority: 14.06.84 NL 8401886

(43) Date of publication of application:
15.01.86 Bulletin 86/3

(84) Designated Contracting States:
AT BE CH DE FR GB IT LI LU NL SE

(71) Applicant: NEDERLANDSE CENTRALE ORGANISATIE
VOOR TOEGEPAST-NATUURWETENSCHAPPELIJK
ONDERZOEK
Juliana van Stolberglaan 148
NL-2595 CL The Hague(NL)

(72) Inventor: Collet, Peter Jacobus
Henri Dunantlaan 55
NL-7312 AV Apeldoorn(NL)

(74) Representative: van der Beek, George Frans et al,
Nederlandsch Octrooibureau Johan de Wittlaan 15 P.O.
Box 29720
NL-2502 LS 's-Gravenhage(NL)

(54) **Heat distribution with buffer system.**

(57) A collective heat supply system with continuous heat supply, provided with a well-insulated return distribution system 4, 6, will suffer increasing heatloss percentages, the lower the building density is.

The present invention provides such system for low building density with considerably lower heatlosses, by providing each consumer with a well-insulated heat accumulator tank 23, which only is periodically charged. The individual service pipes 20, 21 between the consumer 10-15 and distribution system 4, 6 can thus be uninsulated, directly laid into the ground, cheap, since they only transport periodically heat. From calculations it follows that especially for consumers with also heated tapwater service 26, 27, 28 a comparatively high supply temperature and low return temperature is preferable, reducing charging time, pipe diameter, accumulator volume and thus heatlosses (total of charging and idle) and cost. Heat consumption measuring 29, which still is a problem, will be simplified thanks to the high flow and temperature difference between supply and return.

./...

Fig-1

Heat distribution with buffer system.

The invention relates to a system for collective heat supply, in particular for a district with low building density, such as one with single-family dwellings, consisting of an insulated distribution pipe system for circulation of a heat transfer medium through the district from at least one central heat source, such as a thermal power station, central boiler house or heat pumping station or combinations thereof, and of an insulated supply and return pipe system between the distribution pipe system and a well-insulated heat buffer per user, which could be in the form of a tank or container for the transfer medium, it being possible to adapt said system for space heating plus running hot water or for space heating alone, and the system also being provided with the necessary heat measuring equipment per user.

A heat distribution system with heat buffer per user or home is known from British Patent 1,425,508. This publication describes a system which is a combination of a conventional district heating system with or without running hot water and a known individual heating and hot water system for each individual dwelling. For the purpose, each home is provided with an insulated heat buffer in the form of a hot water cistern with the usual insulation. This heat buffer can also be provided with heat by electrical elements, but it is connected with its contents to the central district heating system. The system has a boiler house which continuously circulates heat medium through a supply and return distribution system to which each home is connected via individual service pipes. This heat transfer medium therefore circulates constantly through each heat buffer of each home.

According to the publication, this takes place even in periods when no heat is being used. The main idea is to have a very safe system of heat supply, and another advantage mentioned is that the individual service pipes can be relatively thin and therefore cheaper, despite the insulation required. Due to the smaller dimensions of the service pipes, the heat loss is therefore also reduced. The consumption of heat by the consumer is not continuous, not even per 24 hours, because the use of running hot water in particular is very irregular, but this also applies to heating. On account of this, the service pipe system can be cut relatively fine, thanks to the heat buffer.

A precise analysis of the heat delivery in such a district with low building density shows that, despite the relatively thin, well-insulated service pipes, the percentage heat loss due to the continuous throughflow is relatively high and, of course, this percentage rises on reduction of the useful offtake. The latter applies not only to mild winters, but also in particular to warmer times of the year and to new buildings with better insulated homes, and most particularly to systems with integrated running water supply, since for hot water the infeed temperature of the distribution system must be about 70 deg.C, as against a system which is intended only for space heating, where an infeed temperature of min. about 30 deg.C in the case of floor heating is adequate.

The object of the invention is then to improve the above-described system, in particular as regards heat losses in absolute terms compared with the necessary investment. The object of the invention is therefore to produce a considerable improvement in the efficiency of the system in economic terms, in particular for districts with low building density.

The system described in the preamble is according to the invention characterised in that at least one of the service pipe systems is provided with adjustable shutoff devices and each heat buffer has such a heat capacity and the service pipes have such a diameter that the buffer is substantially periodically chargeable via its service pipes when the shutoff devices are open, and between times the shutoff devices can be closed and no throughflow takes place in the service system.

During the idle period the temperature of the service pipes with their contents falls, and the heat loss per unit time thereby decreases. Per idle period the heat loss is limited to max. the heat content of these pipes. This results in a reduction of the percentage heat losses compared with a system with continuous throughflow in the service pipes, and thus pipe temperatures which are maintained at a constant supply or return temperature level. This reduction becomes relatively more important as the heat offtake per home falls, i.e. where the idle time periods become longer relative to the charging periods.

As a result of this reduction in heat losses, it will be economically justifiable to use longer and less well insulated service pipes. Reduction of the degree of insulation means the use of cheaper pipes which are easier to lay. For example, flexible plastic pipes laid directly in the ground are suitable for this. Extension of the pipe length means that the system offers particular advantages for use in areas with low building density. A further reduction of capital outlay and maintenance costs is obtained by connecting several service pipes to each branching point of the distribution pipes and possibly laying these pipes together with other utility pipes in a common trench.

Yet another advantage is achievable with the system of the invention thanks to the fact that during the charging periods both the volume flow of the transfer medium and the difference between supply and return temperature are chosen relatively high.

A high temperature difference is desirable to limit the buffer volume for a given charging capacity. In practice, this means the maintenance of a relatively high supply temperature, which corresponds well with the operating conditions for good heat regulation and for the possibility of providing running hot water requirements. The combination of a high volume flow and a great temperature difference makes it possible to have much simpler heat measuring equipment per home while retaining the desired accuracy. This produces a reduction in the capital outlay and maintenance costs, which offsets the additional cost of a heat buffer.

Depending on the ground plan of the district or the type of buildings, such as homes, schools, offices or other buildings in periodic use, it can be advantageous also to design at least part of the distribution pipe system so that it can be shut off, or even to keep the entire collective heat supply system only periodically in operation. Here, it is, of course, possible to have all kinds of intermediate forms which have different advantages in each case. This applies in particular to summer periods with a very low average heat use over the period. What has been said above on the periodic use of the service pipe systems can apply to part or even all of the distribution system, including the central heat source.

The necessary shutoff devices in the service pipe systems and/or in (part of) the distribution pipe system should also be periodically opened and closed. The periodic charging of the heat buffer is preferably controlled by the temperature of the buffer, in which case it is generally also preferable to position the shutoff devices in the vicinity of the heat buffer. In this case, the periodic flow of transfer medium through the service pipe concerned takes place for only so long as is necessary for full charging of the heat buffer concerned. This can in turn lead to a further reduction in losses. In a different embodiment one can, however, have centralised remote control, in which case the shutoff devices are preferably sited in the vicinity of their branching point of the distribution system.

Although the capital outlay for it is not inconsiderable, it can in some circumstances be economically justified to displace the heat transfer medium in the service pipes at the end of a charging period with relatively colder heat transfer medium. In one preferred embodiment the above-mentioned adjustable shutoff devices are placed near the branching points of the distribution pipes, and at this point a connection which can be shut off is laid between supply and return pipes. After each charging period, these service pipes are shut off from the distribution pipes and the shutoff devices in the connection pipe are opened. By means of the circulation pump in the home, high-temperature medium is pumped into the supply pipe to the heat buffer and hereby replaced by medium at the considerably lower return temperature level.

A further reduction in heat losses is obtained by providing each home with an additional small storage tank and on the basis of a comparable mode of operation filling it after each idle period with cold medium from the cooled service pipes, and after each charging period using this cold medium again to displace the higher temperature water in the supply and return pipes.

In addition to the above, it can also be said that the conveyed heat capacity during the period of charging can be considerably higher than the connection value of the home. It can also be pointed out that the heat buffer itself has, of course, always some heat loss (which can be useful in the heating season), but since such a buffer is sited in the house, it can easily be very well insulated, and it has a higher volume to surface ratio than the long thin service pipes. The percentage and absolute losses of a proper heat buffer are therefore extremely low, compared with even well insulated service pipes.

It follows from all that has been said above that the percentage idle - time - losses can be reduced to a particularly low value by simply choosing a big enough capacity for the heat buffer, insofar as this is economically justified.

The possibilities of the system will be explained in the figure description, with reference to some numerical examples.

A number of preferred embodiments of the invention will also be explained schematically in greater detail in the figure description.

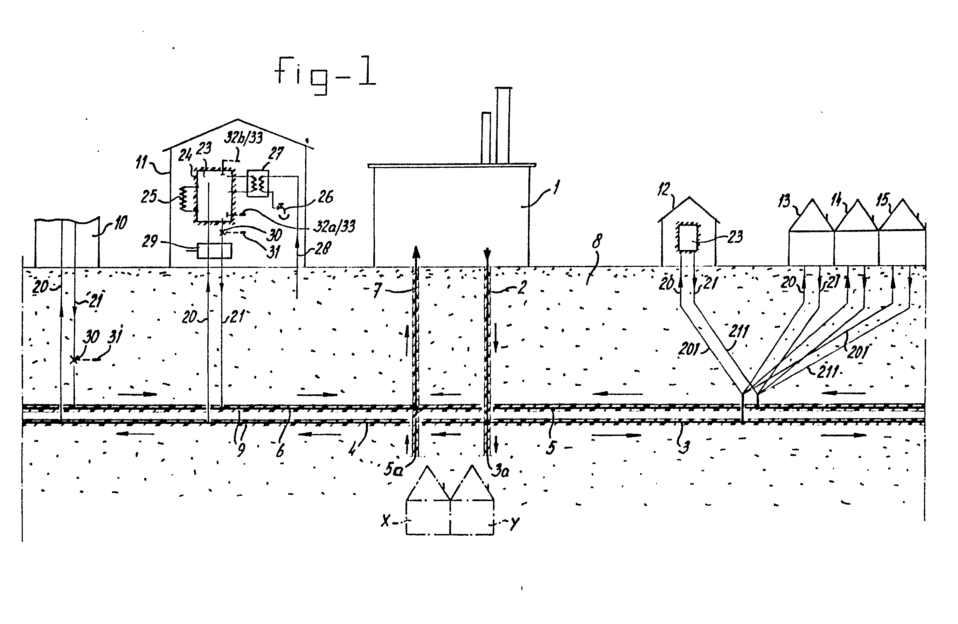

Fig. 1 shows schematically a collective heat supply system for a district.

Figs. 2 and 3 give a numerical example with results in a graph.

The central heat source is indicated by 1. From the supply station 1 the heated transfer medium is circulated through a distribution/ return pipe system 2–7, which in the example shown branches into two supply branches 3 and 4, each intended for part of the district. When the heat transfer medium has given off heat to consumers, it is conveyed back via the return pipe system 5, 6 and 7. The distribution pipe system can also have more branches connected to it, such as is shown schematically by 3A and 5A. These branches will generally be provided with shutoff valves (not shown) separating them from the main distribution system. It should be pointed out that all components not relevant for the invention, but known and essential for the practical execution, such as shutoff valves, pumps, expansion means, aeration means and the like are not illustrated. In the majority of cases the heat transfer medium will be circulated continuously through the distribution pipe system 2–7. This pipe system is also of considerable dimensions and is therefore well insulated, as indicated schematically by 9. The district has a number of buildings, including detached houses and single-family homes, some of which (10-15) are shown schematically. They are all connected to the collective heat distribution system. In the detached house 11 the main parts required for the heat distribution system according to the invention are shown schematically. Branching off from the distribution pipe 4 is the service pipe 20, which leads to the heat buffer 23 sited in the house 11. Since this is a circulation system, a return service pipe 21 is connected from the bottom side of the heat buffer 23 to convey the heat transfer medium from the heat buffer back via the return distribution pipe 6 to the supply station. The service pipes 20 and 21 are only moderately insulated and are preferably laid directly in the ground 8, and they can be up to several dozen metres long. For example, they are made of multi-walled flexible plastic. They both have as low an internal diameter as is possible bearing in mind the maximum permissible rate of flow (noise) and the necessary heat transfer capacity for the home concerned. The heat buffer 23 is well insulated, as schematically indicated by 24. All heat users of the home are connected to the heat buffer 23. The heating system is schematically shown as 25, and for it circulation pumps, thermostatically operated valves and the like (not shown) are of, course, needed. The house 11 is also provided with a running hot water system which also takes its heat from the heat buffer 23. Illustrated schematically by 28 is the connection of the drinking water system of the house to the utility pipe in the ground, which is not illustrated. Connected via a flow heat exchanger 27 to the heat buffer 23, the cold drinking water supply is heated and taken to the hot water taps, one of which is schematically shown by 26. As usual in collective heat supply systems, the water consumption per home is measured, which is schematically shown by 29. The heat meter 29 measures the temperature difference between the supply 20 and the return pipe 21 and multiplies the measured average value by the quantity of heat transfer medium which has flowed through. The latter can be carried out with, for example, a known flow meter. According to the invention, the heat buffer is charged only periodically, even though in the distribution pipe system 2-7 the flow is for fairly long periods or is continuous. A shutoff valve 30 is therefore provided, for example in the return pipe 21. It will be clear that a shutoff valve (not shown) can also be placed in the supply service pipe 20. The valve 30 should be opened periodically to charge the heat buffer 23 with the maximum available heat capacity flow and then to end the charge again by closing fully. The controls for this and the control line are both indicated by 31. The control 31 can, for example, come from a timer, in order to supply heat to the various homes in the district in turn, so that the supply station can operate as well as possible with a constant load. It is, however, preferable to have the control 31 operated by two temperature sensors 32A, 32B, or located inside the buffer 23 at the top and bottom. If the temperature sensor 32B has measured either a previously set lower value or that the temperature has become the same as the return temperature, it will give a command 33 for opening of the valve 30. It then closes when the sensor 32A also measures the supply temperature. This means that the periodic charging duration depends on the heat requirements. There is then no need for unnecessary long heat circulation - with all the losses it entails - through the service pipes 20 and 21 concerned of house 11.

It is also possible to control the valve 30 via a signal 31, coming from the supply station. A separate control system is then needed for this, but the advantage is that the supply station can supply the homes periodically with heat as required for longer or shorter periods. In this case it can be an advantage if the valve 30 is not fitted in the home concerned, but near the particular branching point of the distribution pipe, as schematically shown for home 10.

Since the branching points of the service pipes on the distribution system account for a significant percentage of the total costs, partly because shutoff valves which have to be easily accessible often are placed here, it may be a good idea to connect a number of homes 12-15 to one single fairly large branching point.

The same number of supply and return service pipes 201 and 211 then connect the houses to the central branching point. Each home is provided with its own heat buffer 23, heat consumption meter 29 and control means, as described for house 11.

It is finally also possible within the scope of the invention to make the whole supply station operate periodically or at least to supply parts of a district connected to the station in their entirety, periodically and in turn, with heat. In general, the greatest advantage of the invention will, however, be achieved if the distribution pipe system is essentially continuously in operation, but the individual services periodically.

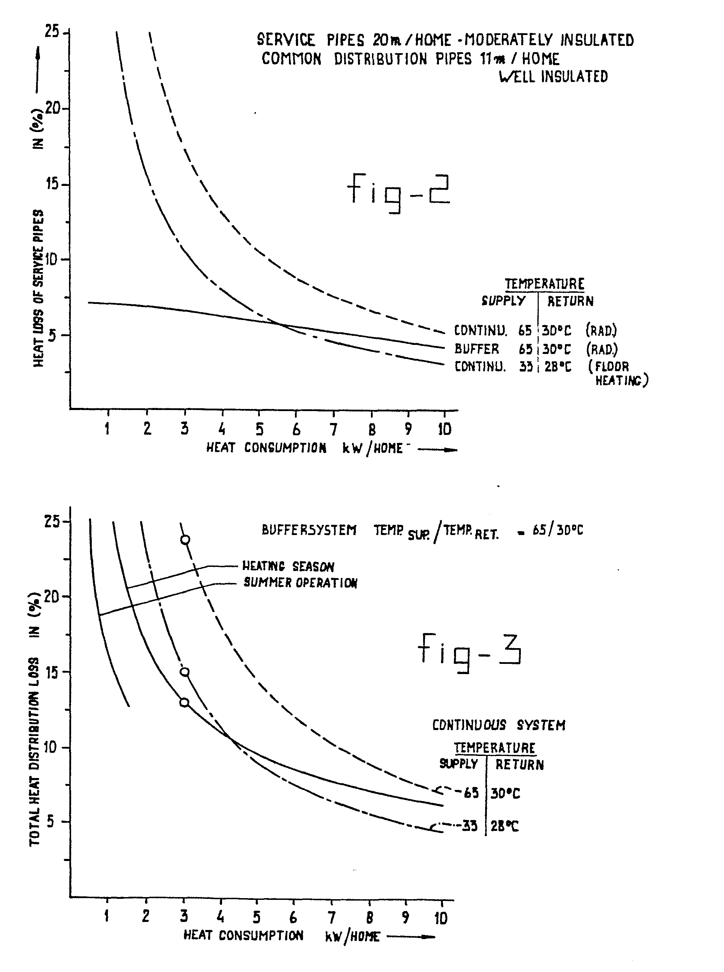

Figs. 2 and 3 give graphs which relate to the heat supply used by an average home. The top graphs give the heat loss in per cent of the service pipes, and the bottom curves the total heat loss in per cent. Per graph, the curves relate to the known continuous heat distribution with radiators and running hot water, with a supply temperature of 65 deg.C and a return temperature of 30 deg.C, and for a known continuous distribution system for floor heating alone, with a supply temperature of 33 deg.C and an average return temperature of 28 deg.C, as against a buffer system according to the invention with radiators and hot running water also at 65/30 deg.C.

The bottom graph also indicates for the buffer system how great the total percentage losses are for the heating season and for summer operation with running hot water supply alone.

The examples are calculated for a moderately insulated service pipe of 20 metres per home laid in the ground, and a common, well insulated distribution pipe with a laid length of 11 metres per home. These values are representative for a moderate building density of about 25 homes per hectare. The pipes are also considered to have internal diameters suitable for a connection value of 10 kW per home, while a heat consumption of 3 kW per home as the average for the whole year can be regarded as representative. For such conditions a heat buffer with a capacity of 200 litres of water is adequate. It appears that an increase in the supply and the return temperatures of 33/28 deg.C to 65/30 deg. C respectively gives a considerable increase in the losses in the known distribution system. However, it appears that with the buffer system, and particularly with low heat consumption, the losses can be considerably lower. Modern building with well insulated houses, and thus low heat consumption, therefore promotes the use of the buffer system according to the invention.

Something similar can be seen from the bottom graphs in fig. 3, in which the totalled heat losses of the continuously operating distribution system plus the periodically operating service system are shown, again as a function of the heat consumption per home. Here again, the buffer system is found to be attractive in the case of well insulated homes with low heat consumption, despite the low building density of the district in question.

It is likely that even in areas with largely detached homes comparably low values for the heat loss are still possible with the buffer system. Although the pipe lengths per home will be greater, this will in general be accompanied by higher heat requirements per home. It can be deduced that the percentage heat losses remain the same, if heat requirements and storage volume of the heat buffer increase proportionately, thus with doubling of the heat requirements, a distribution pipe length of 22 metres per home, a service pipe length of 40 metres and a buffer capacity of 400 litres.

## C L A I M S

1. System for collective heat supply, in particular for a district with low building density, such as one with single-family dwellings, consisting of an insulated distribution pipe system for circulation of a heat transfer medium through the district from at least one central heat source, such as a thermal power station, central boiler house or heat pumping station or combinations thereof, and of an insulated supply and return pipe system between the distribution pipe system and a well-insulated heat buffer per user, which could be in the form of a tank or container for the transfer medium, it being possible to adapt said system for space heating plus running hot water or for space heating alone, and the system also being provided with the necessary heat measuring equipment per user, characterised in that at least one of the service pipe systems is provided with adjustable shutoff devices and each heat buffer has such a heat capacity and the service pipes have such a diameter that the buffer is substantially periodically chargeable via its service pipes when the shutoff devices are open, and between times the shutoff devices can be closed and no throughflow takes place in the service system.

2. System according to Claim 1, characterised in that during the periodic charging for maximum or at least considerable throughflow the shutoff devices are fully open and the service pipes have an economically justifiable small cross section.

3. System according to Claims 1 or 2, characterised in that the service pipes have a moderate to low insulation value, such as, for example, pipes which are of made of multiwalled flexible plastic and are laid directly in the ground.

4. System according to one or more of the preceding claims, characterised in that the measuring equipment is of a simple,

0168084

relatively insensitive type.

5. System according to one or more of the preceding claims, characterised in that there are in the distribution system means with which outside the charging periods of the heat buffers at least part of the distribution pipe system can also be switched off, or even the whole collective heat supply system is only periodically in operation.

6. System according to one or more of the preceding claims, where the system is equipped for both heating and integrated running hot water supply, characterised in that a great difference is chosen between the supply and return temperature of the distribution and service system.

7. System according to one or more of the preceding claims, characterised in that several individual users are connected via their own service pipes to one branching point of the distribution pipes.

8. System according to one or more of the preceding claims, characterised in that the periodic charging of the heat buffer is controlled by the temperature of the buffer.

9. System according to one or more of the preceding claims, characterised in that the periodic charging of the heat buffer is controlled centrally.

10. System according to one or more of the preceding claims, characterised in that the shutoff means of the service pipe system are situated in the vicinity of the heat buffer.

11. System according to one or more of the preceding claims, characterised in that the shutoff means of the service pipe system are situated in the vicinity of their branching point of the distribution system.

12. System according to one or more of the preceding claims, characterised in that provisions are made by means of which after each charging period of a heat buffer the contents of the service pipes at high temperature level are temporarily displaceable by heat transfer medium at a lower temperature level.

13. System according to Claim 12, characterised in that the displacement takes place with medium at return temperature level.

14. System according to Claim 12, characterised in that the displacement takes place with medium at ground temperature level, to which end the home is provided with an additional small storage tank of this cold medium, provided with the necessary shutoff valves and control means.

15. System according to Claim 12, characterised in that the medium at the higher temperature level from the distribution pipes can be displaced to a heat storage tank which is sited at the central heat production plant, in the event of the distribution - (part)system under consideration - being only periodically in operation.

# Fig-1

SERVICE PIPES 20m/HOME -MODERATELY INSULATED
COMMON DISTRIBUTION PIPES 11m/HOME
WELL INSULATED

fig-2

**TEMPERATURE**

| | SUPPLY | RETURN | |
|---|---|---|---|
| CONTINU. | 65 | 30°C | (RAD.) |
| BUFFER | 65 | 30°C | (RAD.) |
| CONTINU. | 33 | 28°C | (FLOOR HEATING) |

HEAT LOSS OF SERVICE PIPES IN (%)

HEAT CONSUMPTION kW/HOME

BUFFERSYSTEM TEMP. SUP./TEMP. RET. = 65/30°C

HEATING SEASON
SUMMER OPERATION

fig-3

CONTINUOUS SYSTEM

**TEMPERATURE**

| SUPPLY | RETURN |
|---|---|
| 65 | 30°C |
| 33 | 28°C |

TOTAL HEAT DISTRIBUTION LOSS IN (%)

HEAT CONSUMPTION kW/HOME

**0168084**
Application number

EP 85 20 0928

European Patent
Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int Cl.4) |
|---|---|---|---|
| A,D | GB-A-1 425 508  (BROSENIUS) | | F 24 D  11/00 |
| A | NL-A-8 102 946  (AGA-CTC VÄRMEVÄXLARE AB) <br> * Claims 1,4,5; figures * | 1,2,7 | |
| A | EP-A-0 027 676  (WAVIN B.V.) | 7,11 | |

TECHNICAL FIELDS
SEARCHED (Int Cl 4)

F 24 D

The present search report has been drawn up for all claims

| Place of search | Date of completion of the search | Examiner |
|---|---|---|
| THE HAGUE | 19-09-1985 | VAN GESTEL H.M. |